# EUROPÄISCHE PATENTSCHRIFT

(11) **EP 2 227 348 B1**
(45) Veröffentlichungstag und Bekanntmachung des Hinweises auf die Patenterteilung: **28.12.2011**
(21) Anmeldenummer: 08867604.4
(22) Anmeldetag: 31.10.2008
(51) Int. Cl.: B23Q 11/00, B23Q 17/24, F16P 3/14, G01V 8/10

(54) **ÜBERWACHUNGSEINHEIT FÜR EINEN ÜBERWACHUNGSBEREICH IN EINER WERKZEUGMASCHINE**
MONITORING UNIT FOR A MONITORING REGION IN A MACHINE TOOL
UNITÉ DE SURVEILLANCE POUR UNE ZONE À SURVEILLER DANS UNE MACHINE-OUTIL

(30) Priorität: 21.12.2007 DE 102007062949
(43) Veröffentlichungstag der Anmeldung: 15.09.2010
(73) Patentinhaber: Robert Bosch GmbH, 70442 Stuttgart (DE)
(72) Erfinder: WINGBERMUEHLE, Jochen, 30966 Hemmingen (DE); HEILER, Matthias, CH-8055 Zürich (CH)
(86) Internationale Anmeldenummer: PCT/EP2008/064803
(87) Internationale Veröffentlichungsnummer: WO 2009/083301

(56) Entgegenhaltungen:
- EP-A- 1 164 556
- WO-A-2007/020666
- DE-A1-102005 054 128
- US-A1- 2007 131 850

## Beschreibung

### Stand der Technik

Die Erfindung geht aus von einer Werkzeugmaschinenvorrichtung mit einer Überwachungseinheit zur Überwachung von zumindest einem Werkzeugmaschinenüberwachungsbereich nach dem Oberbegriff des Anspruchs 1.

Es ist eine Sägemaschenvorrichtung zum Überwachen eines Getahrenhereichs bei einer Sägemaschine in der unmittelbaren Nähe eines Sägeblatts bekannt, die eine Videokamera und eine Projektionseinheit zur Projektion eines Musters auf eine Arbeitsfläche der Sägemaschine aufweist.

Aus der EP 1164 556 A2 ist eine optoelektronische Vorrichtung zur Überwachung eines Schutzbereichs mit zumindest einer berührungslos wirkenden Schutzeinrichtung bekannt. Die berührungslos wirkende Schutzeinrichtung der EP 1 164 556 A2 umfasst eine Auswerteeinheit zum Erzeugen eines Gegenstandsfeststellungssignals beim Eindringen eines Objektes in den Schutzbereich. Mit der berührungslos wirkenden Schutzeinrichtung ist eine Bilderfassungseinheit zum Erfassen eines flächigen oder räumlichen Bilderfassungsbereichs gekoppelt, mit der ein nahe am Schutzbereich, jedoch außerhalb des Schutzbereichs gelegener sekundärer Überwachungsbereich, erfassbar ist. Die berührungslos wirkende Schutzeinrichtung ist durch die Bilderfassungseinheit ansteuerbar.

### Vorteile der Erfindung

Die Erfindung geht aus von einer Werkzeugmaschinenvorrichtung mit einer Überwachungseinheit zur Überwachung von zumindest einem Werkzeugmuschinenüberwachungsbereich, die eine Projektionseinheit zur Protektion in den Überwachungsbereich, eine Erfassungseinheit zum Erfassen des Werkzeugmaschinenüberwachungsbereichs und eine Mustererzeugungseinheit aufweist, die dazu vorgesehen ist, wenigstens ein Muster für eine Projektion in den Werkzeugmaschinenüberwachungsbereich zu erzeugen.

Es wird vorgeschlagen, das die Werkzeumaschinenvorrichtung eine Auswerteeinheit aufweist, die dazu vorgesehen ist, ein dein erzeugten Muster zugeordnetes, mittels der Erfässungseinhert erfasstes Muster auszuwerten. Es kann dadurch ein Überwachungsvorgang des Werkzeugmaschinenüberwaschungsbereichs erreicht werden, bei welchem eine hohe Zuverlässigkeit in der Überwachung bei unterschiedlichen Umgebungsparametern, wie z.B. Beleuchtungsverhältnissen, und stark differierenden Typen von zu überwachenden Objekten erzielt werden kann. Ist insbesondere der Werkzeugmaschinenüberwachungsbereich auf das Vorhandensein eines menschlichen Körperteils zu überwachen, kann ein Einfluss einer Hautfarbe, einer Bekleidung, einer Form oder einer Haltung des Körperteils auf einen Überwachungsvorgang erheblich reduziert werden. Die Auswerteeinheit weist eine Recheneinheit auf, die dazu vorgesehen ist, zumindest ein geometrisches Merkmal des erfassten Musters auszuwerten, wodurch schnelle Auswertezeiten erreicht werden können. Hierbei kann das Vorhandensein eines Objekts im Werkzeugmaschinenüberwachungsbereich besonders einfach erkannt werden, indem geometrische Merkmale des erfassten Musters, die durch das Projizieren des erzeugten Musters auf das Objekt hervorgerufen sind, durch die Recheneinheit ausgewertet werden. Die Auswerteeinheit kann eine Speichereinheit aufweisen, in welcher ein Programm gespeichert ist, das von der Recheneinheit zur Auswertung des erfassten Musters durchgeführt wird. Das Programm kann ein Bildverarbeitungsprogramm sein.

Die Projektionseinheit und die Mustererzeugungseinheit können voneinander unterschiedlich ausgebildet sein oder sie können miteinander zumindest teilweise einstückig ausgebildet sein. Die Mustererzeugungseinheit kann als Recheneinheit ausgeführt sein, die zur Erzeugung des Musters ein Programm durchführt. Unter einem "Muster" soll insbesondere eine geometrische Ausgestaltung, wie ein geometrisches Motiv, verstanden werden. Die Erfassungseinheit weist zu einem "Erfassen" des Werkzeugmaschinenüberwachungsbereichs ein insbesondere durch eine Optik festgelegtes Blickfeld auf, das zumindest den Werkzeugmaschinenüberwachungsbereich umfasst oder das dem Werkzeugmaschinenüberwachungsbereich entspricht. Unter "vorgesehen" soll insbesondere speziell ausgelegt, ausgestattet und/oder programmiert verstanden werden.

Die Auswerteeinheit weist eine Recheneinheit auf die dazu vorgesehen ist, das erfasste Muster auf ein vorbestimmtes Merkmal zu untersuchen, wodurch besonders kurze Auswertezeiten erreicht werden können. Hierzu weist die Auswerteeinheit insbesondere eine Speichereinheit auf, in welcher Daten, die dem vorbestimmten Merkmal zugeordnet sind, gespeichert sind. Das Merkmal ist hierbei insbesondere dadurch "vorbestimmt", dass diese Daten im Vorfeld eines Auswertevorgangs in der Auswerteeinheit vorliegen. Das vorbestimmte Merkmal entspricht vorzugsweise einem Merkmal, das für eine bestimmte Anwendungssituation, die bei der Anwendung einer Werkzeugmaschine potentiell auftreten kann, charakteristisch ist. Insbesondere dient das Merkmal zur Charakterisierung des Vorhandenseins eines zu bearbeitenden Werkstücks und/oder eines menschlichem Körperteils im Werkzeugmaschinenüberwachungsbereich.

Die Projektionseinheit ist vorteilhafterweise zu einer Projektion des erzeugten Musters mittels sichtbaren Lichts vorgesehen. Dadurch kann das projizierte Muster vorteilhaft zusätzlich als Markierung von zumindest einem Teilbereich des zu überwachenden Werkzeugmaschinenüberwachungsbereichs genutzt werden. Die Projektionseinheit weist hierbei vorzugsweise ein Leuchtmittel zur Lichtemission in einem sichtbaren Bereich auf. Eine Projektion mittels eines unsichtbaren Signals, wie z.B. in einem Infrarotbereich, ist ebenfalls denkbar.

Der Werkzeugmaschinenüberwachungsbereich weist vorteilhafterweise zumindest einen Gefahrenbereich auf, der in unmittelbarer Nähe eines Werkzeugs angeordnet ist, wodurch eine hohe Sicherheit erreicht werden kann. Hierbei ist die Auswerteeinheit insbesondere dazu ausgelegt, das Vorhandensein eines menschlichen Körperteils im Gefahrenbereich zu erkennen.

Die Sicherheit kann weiter erhöht werden, wenn das erzeugte Muster dazu dient, einen Gefahrenbereich in unmittelbarer Nähe eines Werkzeugs zu markieren. Insbesondere kann das projizierte Muster zumindest eine Grenze des Gefahrenbereichs markieren. Unter einem Bereich, der "in unmittelbarer Nähe" eines Werkzeugs angeordnet ist, soll insbesondere ein Bereich verstanden werden, der sich aus Punkten zusammensetzt, die einen kleinsten Abstand zum Werkzeug aufweisen, der kleiner als 10 cm, vorteilhaft kleiner als 5 cm und bevorzugt kleiner als 2 cm ist.

Vorteilhafterweise weist das erzeugte Muster zumindest eine zusammenhängende Linie auf, wobei die Auswerteeinheit eine Recheneinheit umfasst, die dazu vorgesehen ist, das erfasste Muster auf zumindest eine Unterbrechung zu untersuchen, wodurch ein besonders schneller Auswertevorgang, erreicht werden kann. Insbesondere kann dadurch ein vom Vorhandensein eines Objekts im Werkzeugmaschinenüberwachungsbereich hervorgerufener Höhenunterschied besonders effektiv ausgewertet werden.

Außerdem wird vorgeschlagen, dass das erzeugte Muster zumindest eine Linie aufweist und die Auswerteeinheit eine Recheneinheit umfasst, die dazu vorgesehen ist, die Krümmung einer der erzeugten Linie zugeordneten Linie des erfassten Musters zu untersuchen. Hierdurch kann das Vorhandensein eines Objekts mit gekrümmter Oberfläche im Werkzeugmaschinenüberwachungsbereich besonders einfach erkannt werden. Ist die Linie des erzeugten Musters als gerade Linie ausgebildet, so ist die Recheneinheit insbesondere dazu vorgesehen, die der erzeugten Linie zugeordnete Linie auf eine Abweichung von einer geraden Strecke zu untersuchen.

In einer weiteren Ausbildung der Erfindung wird vorgeschlagen, dass das erzeugte Muster zumindest zwei parallele Linien aufweist und die Auswerteeinheit eine Recheneinheit umfasst, die dazu vorgeschen ist, die Parallelität von den erzeugten Linien zugeordneten Linien des erfassten Musters zu untersuchen, wodurch ein besonders zuverlässiger Überwachungsvorgang erreicht werden kann.

Eine besonders hohe Infonnationsdichte und dadurch eine hohe Unterscheidungskraft können erreicht werden, wenn das erzeugte Muster als Gittermuster ausgebildet ist.

Ferner wird vorgeschlagen, dass das erzeugte Muster zumindest eine gekrümmte Linie aufweist. Hierdurch kann ein an ein Werkstück mit einer gekrümmten Oberfläche angepasstes Muster erreicht werden, wodurch eine hohe Unterscheidungskraft bei dem Einsatz eines derartigen Werkstücks erreicht werden kann.

In einer bevorzugten Ausführung der Erfindung wird vorgeschlagen, dass die Werkzeugmaschinenvorrichtung eine Sicherheitsvorrichtung aufweist, die zur Durchführung einer Sicherheitsmaßnahme in Abhängigkeit eines Signals der Auswerteeinheit vorgesehen ist. Durch ein derartiges Zusammenwirken der Auswerteeinheit und einer Sicherheitsvorrichtung können besonders kurze Reaktionszeiten bei der Erkennung einer Gefahrensituation bei der Anwendung einer Werkzeugmaschine erreicht werden. Die Sicherheitsvorrichtung weist insbesondere zumindest eine Aktorikeinheit, die zur Durchführung einer ein Werkzeug betreffenden Sicherheitsmaßnahme dient, und eine Steuereinheit auf, die dazu vorgesehen ist, abhängig von einem Signal der Auswerteeinheit die Aktorikeinheit zu betätigen. Die Aktorikeinheit kann dazu dienen, einen Antrieb des Werkzeugs zu stoppen, wie z.B. im Zusammenwirken mit Sicherungsmitteln und/oder mit einer Antriebseinheit, und/oder sie kann dazu dienen, das Werkzeug in einen für einen Anwender unzugänglichen Bereich zu verfahren, und/oder sie kann dazu ausgelegt sein, das Werkzeug zu bedecken.

In diesem Zusammenhang wird vorgeschlagen, dass die Auswerteeinheit eine Recheneinheit aufweist, die dazu vorgesehen ist, einem Merkmal des erfassten Musters eine Sicherheitsstufe der Sicherheitsvorrichtung zuzuordnen. Hierdurch kann eine Sicherheitsmaßnahme nach Eintritt einer Gefahrensituation besonders schnell getroffen werden. Unter einer "Sicherheitsstufe" soll insbesondere ein Kennzeichen für einen bestimmten Sicherheitsmodus verstanden werden. In einer niedrigen Sicherheitsstufe kann ein erster Sicherheitsmodus dazu dienen, einen Antrieb des Werkzeugs fortzuführen. Es ist vorteilhaft zumindest eine zweite, hohe Sicherheitsstufe vorgesehen, die einem zweiten Sicherheitsmodus entspricht, in welchem eine Sicherheitsmaßnahme von der Aktorikeinheit und/oder der Steuereinheit durchgeführt wird. Die Sicherheitsstufen können insbesondere in einer Speichereinheit vorgespeichert sein, mit welcher die Recheneinheit in Wirkverbindung steht.

Ferner geht die Erfindung aus von einem Verfahren mit einer Werkzeugmaschinenvorrichtung, mittels welcher ein Werkzeugmaschinenüberwachungsbereich einer Werkzeugmaschine überwacht wird, bei welchem ein Muster erzeugt und in den Werkzeugmaschinenüberwachungsbereich projiziert wird.

Es wird vorgeschlagen, dass ein dem erzeugten Muster zugeordnetes, erfasstes Muster ausgewertet wird. Es kann dadurch ein Überwachungsvorgang des Werkzeugmaschinenüberwachungsbereichs erreicht werden, bei welchem eine hohe Zuverlässigkeit in der Überwachung bei unterschiedlichen Ugebungsparametern, wie z.B. Beleuchtungsverhältnissen, und stark differierenden Typen von zu überwachenden Objekten erzielt werden kann.

Außerdem wird vorgeschlagen, dass einem Merkmal des erfassten Musters eine Sicherheitsstufe einer Sicherheitsvorrichtung zugeordnet wird, mittels welcher eine Sicherheitsmaßnahme durchgeführt wird, wodurch besonders kurze Reaktionszeiten auf eine bestehende und/oder bevorstehende Gefahr erreicht werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine Sägemaschine mit einer Arbeitsfläche, einem Sägeblatt und einer Überwachungseinheit,
- Fig. 2: eine interne Schaltung der Sägemaschine mit dem Sägeblatt und der Überwachungseinheit, die eine Videokamera und eine Projektionseinheit zum Projizieren eines Musters und eine Auswerteeinheit aufweist,
- Fig. 3: ein von der Videokamera erfasstes Muster,
- Fig. 4: die Sägemaschine bei der Bearbeitung eines Werkstücks, wobei ein Muster auf die Arbeitsfläche und das Werkstück projiziert wird,
- Fig. 5: ein bei der Anwendungssituation aus Figur 4 von der Videokamera erfasstes Muster mit einer Unterbrechung,
- Fig. 6: die Sägemaschine, wobei eine Hand eines Anwenders in einen Gefahrenbereich gelangt,
- Fig. 7: ein bei der Anwendungssituation aus Figur 6 von der Videokamera erfasstes Muster mit gekrümmten Bereichen,
- Fig. 8: ein als Gitter ausgebildetes Muster,
- Fig. 9: ein dem Gittermuster zugeordnetes, von der Videokamera erfasstes Muster und
- Fig. 10: ein Muster mit gekrümmten Linien.

### Beschreibung der Ausführungsbeispiele

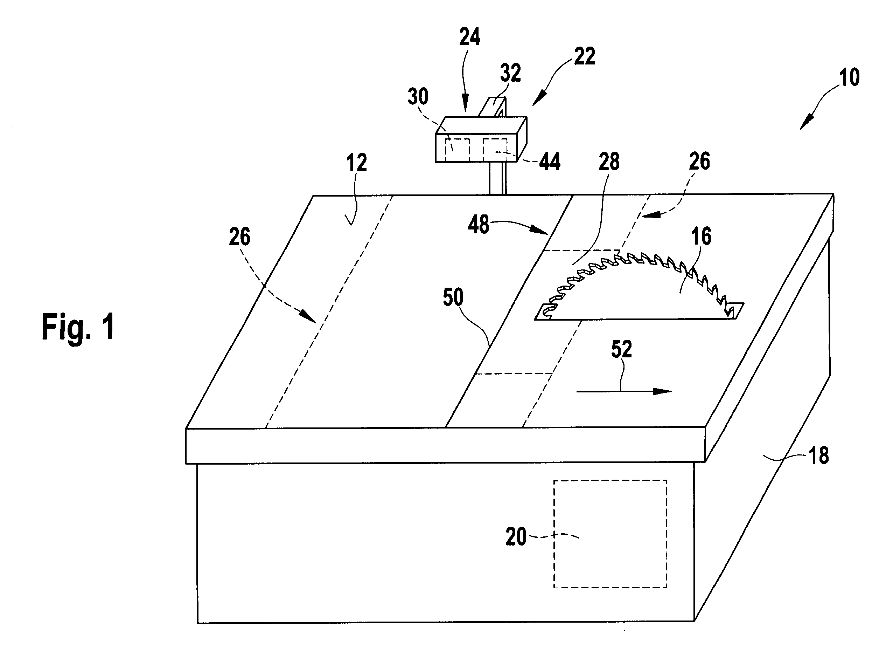

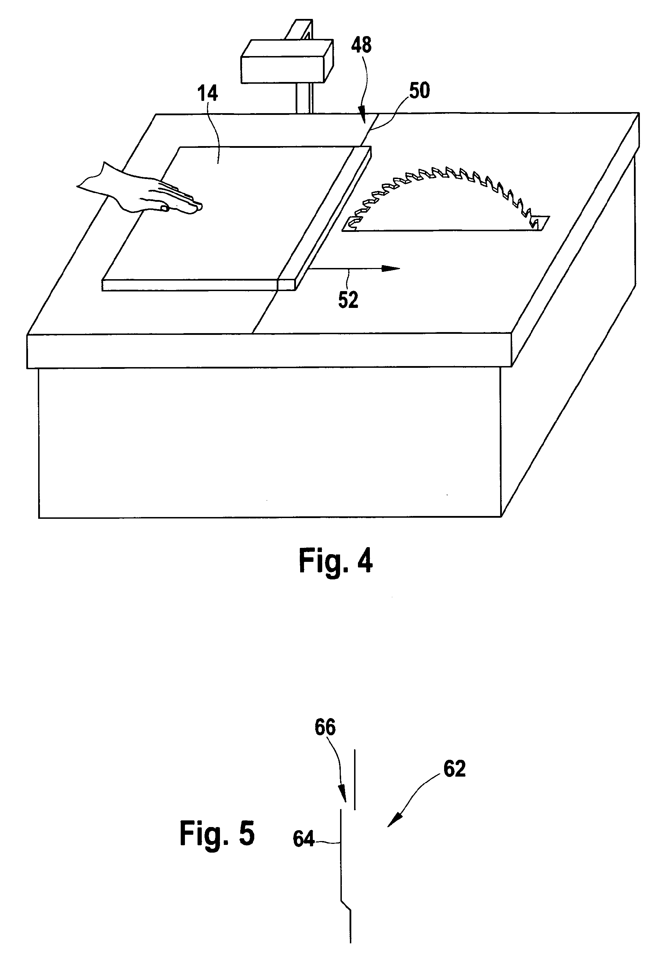

Figur 1 zeigt eine als Tischkreissäge ausgebildete Werkzeugmaschine 10 in einer perspektivischen Ansicht. Diese weist eine Arbeitsfläche 12 auf, die als Werkstückauflagefläche zum Auflegen eines zu bearbeitenden Werkstücks 14 (siehe Figur 4) ausgebildet ist und in einer Grundeinbaustellung der Werkzeugmaschine 10 horizontal ausgerichtet ist. Aus der Arbeitsfläche 12 herausragend ist ein als kreisförmiges Sägeblatt ausgebildetes Werkzeug 16 angeordnet. In einem Werkstückbearbeitungsvorgang wird das Werkzeug 16 von einer Antriebseinheit 20, die sich in einem unterhalb der Arbeitsfläche 12 angeordneten Antriebsgehäuse 18 befindet und als Elektromotor ausgeführt ist, zu einer Rotation angetrieben.

Die Werkzeugmaschine 10 umfasst eine Werkzeugmaschinenvorrichtung 22 mit einer Überwachungseinheit 24. Diese Überwachungseinheit 24 ist dazu vorgesehen, einen Werkzeugmaschinenüberwachungsbereich 26 zu überwachen. Die Abgrenzung des Werkzeugmaschinenüberwachungsbereichs 26 auf der Arbeitsfläche 12 ist in Figur 1 mittels gestrichelter Linien schematisch dargestellt. Der Werkzeugmaschinenüberwachungsbereich 26 enthält einen Teilbereich der Arbeitsfläche 12 und erstreckt sich ferner, ausgehend von der Arbeitsfläche 12, vertikal nach oben. Der Werkzeugmaschinenüberwachungsbereich 26 weist einen Teilbereich auf, der im Bereich des Werkzeugs 16 angeordnet ist. Dieser Teilbereich, der als Gefahrenbereich 28 bezeichnet wird, ist in unmittelbarer Nähe des Werkzeugs 16 angeordnet. Insbesondere grenzt der Gefahrenbereich 28 direkt an das Werkzeug 16 an. Dieser Gefahrenbereich 28 stellt einen Bereich dar, in welchem ein Eindringen eines Körperteils eines Bedieners der Werkzeugmaschine 10 zu vermeiden ist. Die Überwachungseinheit 24 weist eine als Bilderfassungseinheit ausgeführte Erfassungseinheit 30 auf, die dazu dient, den Werkzeugmaschinenüberwachungsbereich 26 zu erfassen. Hierzu weist die Erfassungseinheit 30 ein Blickfeld auf, das dem zu überwachenden Werkzeugmaschinenüberwachungsbereich 26 entspricht. Die Erfassungseinheit 30 ist im gezeigten Ausführungsbeispiel in einer die Arbeitsfläche 12 überstehenden Position angeordnet. Hierbei weist die Werkzeugmaschinenvorrichtung 22 eine Haltevorrichtung 32 auf, die zum Halten der Erfassungseinheit 30 in dieser Position vorgesehen ist. Weitere, dem Fachmann als sinnvoll erscheinende Anordnungen der Erfassungseinheit 30 relativ zur Arbeitsfläche 12 sind denkbar.

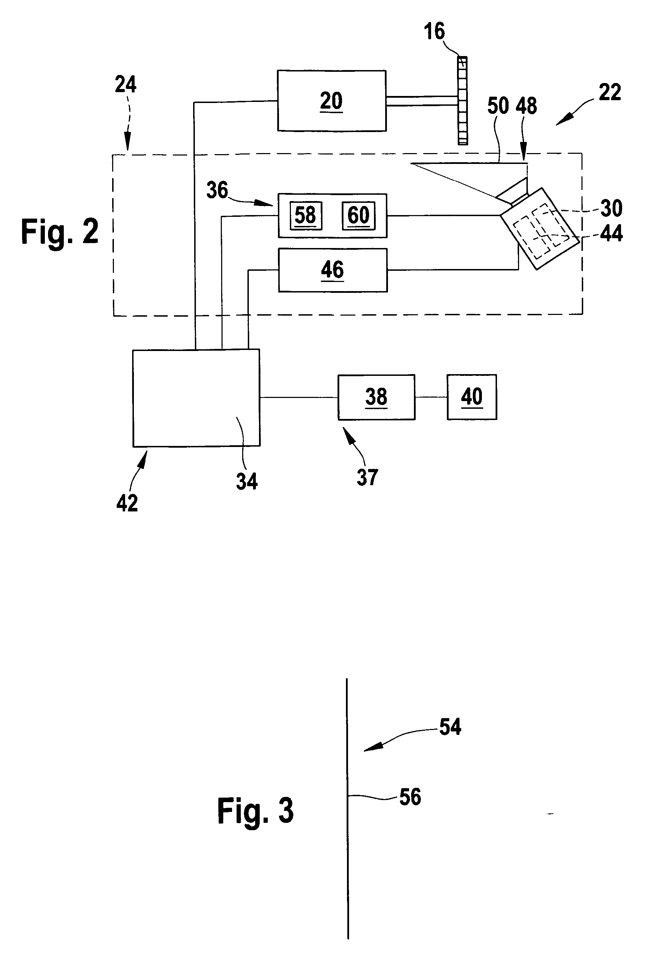

In Figur 2 ist eine interne Schaltung der Werkzeugmaschine 10 schematisch dargestellt. Die Werkzeugmaschinenvorrichtung 22 weist eine Steuereinheit 34 auf, die zum Durchführen von Betriebsmodi der Werkzeugmaschine 10 vorgesehen ist. Die Steuereinheit 34 weist nicht näher dargestellte interne Funktionselemente, wie beispielsweise eine Recheneinheit, eine Speichereinheit usw., auf, die zur Durchführung von Betriebsprogrammen dienen. Die Steuereinheit 34 steht in Wirkverbindung mit der Antriebseinheit 20 und kann Steuersignale zum Steuern und/oder Regeln eines Antriebs des Werkzeugs 16 zur Antriebseinheit 20 übertragen. Die Überwachungseinheit 24 weist zusätzlich zur oben beschriebenen Erfassungseinheit 30 eine Auswerteeinheit 36 auf, die in Wirkverbindung mit der Erfassungseinheit 30 und mit der Steuereinheit 34 steht und deren Funktion unten näher beschrieben wird. Die Auswerteeinheit 36 und die Steuereinheit 34 können miteinander zumindest teilweise einstückig ausgebildet sein.

Die Werkzeugmaschinenvorrichtung 22 weist ferner eine Sicherheitsvorrichtung 37 auf, die dazu dient, Sicherheitsmaßnahmen bei einem Betrieb der Werkzeugmaschine 10 zu treffen. Hierzu weist die Sicherheitsvorrichtung 37 eine Aktorikeinheit 38 auf, die dazu ausgelegt ist, Sicherheitsmaßnahmen durchzuführen, die das Werkzeug 16 betreffen. Dieses ist nach diesen Sicherheitsmaßnahmen beim Vorliegen einer für den Bediener bestehenden Verletzungsgefahr z.B. in einen Stillstand bzw. in einen für den Bediener unzugänglichen Bereich zu versetzen. Die Aktorikeinheit 38 dient dazu, ein mit ihr in Wirkverbindung stehendes Sicherungsmittel 40 auszulösen. In einer ersten Alternative ist das Sicherungsmittel 40 dazu ausgelegt, bei einem Auslösen durch die Aktorikeinheit 38 eine Bewegung des Werkzeugs 16 zu stoppen. Hierbei ist das Sicherungsmittel 40 beispielsweise als Klemmmittel oder als Bremsmittel ausgebildet. In einer weiteren Variante ist das Sicherungsmittel 40 dazu ausgelegt, bei einem Auslösen durch die Aktorikeinheit 38 das Werkzeug 16 in einen für den Bediener unzugänglichen Bereich des Antriebsgehäuses 18 unterhalb der Arbeitsfläche 12 zu versenken. In einer weiteren Ausführung kann das Sicherungsmittel als Deckmittel zum Bedecken des Werkzeugs 16 ausgebildet sein. Das Auslösen des Sicherungsmittels 40 erfolgt durch die Aktorikeinheit 38, wenn diese ein Auslösesignal der Steuereinheit 34 empfängt. Dieses Auslösesignal wird abhängig von einem Signal der Auswerteeinheit 36 an die Aktorikeinheit 38 von der Steuereinheit 34 ausgegeben. Alternativ oder zusätzlich zur Aktorikeinheit 38 ist eine Aktorikeinheit 42 der Werkzeugmaschinenvorrichtung 22 vorgesehen, die der Steuereinheit 34 entspricht. Abhängig von einem Signal der Auswerteeinheit 36 überträgt die als Steuereinheit 34 ausgebildete Aktorikeinheit 42 ein Steuersignal zur Antriebseinheit 20, mittels dessen der Antrieb des Werkzeugs 16 gestoppt wird. Die Durchführung einer Sicherheitsmaßnahme erfolgt somit durch die Aktorikeinheit 38 und/oder 42 in Abhängigkeit von einem Signal der Auswerteeinheit 36, das das Betätigen der Aktorikeinheit 38 bzw. 42 durch die Steuereinheit 34 auslöst. Das Signal der Auswerteeinheit 36 wird an die Steuereinheit 34 übertragen, wenn durch einen Auswertevorgang anhand von durch die Erfassungseinheit 30 erfassten Daten, insbesondere Bilddaten, eine Gefahrensituation bei einem Antrieb des Werkzeugs 16 erkannt wird. Dieser Erkennungsprozess wird unten näher beschrieben.

Die Überwachungseinheit 24 weist eine Projektionseinheit 44 auf, die zu einer Projektion in den Werkzeugmaschinenüberwachungsbereich 26 vorgesehen ist. Ferner umfasst die Überwachungseinheit 24 eine Mustererzeugungseinheit 46, die dazu dient, ein Muster für eine Projektion durch die Projektionseinheit 44 in den Werkzeugmaschinenüberwachungsbereich 26 zu erzeugen. Die Mustererzeugungseinheit 46 steht in Wirkverbindung mir der Steuereinheit 34 und der Projektionseinheit 44. Sie kann ferner Bestandteil der Auswerteeinheit 36 und/oder der Steuereinheit 34 sein oder sie kann identisch mit der Auswerteeinheit 36 oder mit der Steuereinheit 34 ausgebildet sein. Die Mustererzeugungseinheit 46 weist insbesondere ein Programm auf, wie z.B. ein Bildverarbeitungsprogramm, das dazu vorgesehen ist, ein Muster zu erzeugen und in einer nicht näher dargestellten Speichereinheit gespeichert ist. Wie den Figuren 1 und 2 zu entnehmen ist, erzeugt die Mustererzeugungseinheit 46 ein Muster 48, das eine gerade, zusammenhängende Linie 50 aufweist und auf die Arbeitsfläche 12 projiziert wird. Die Linie 50 ist in ihrem projizierten Zustand senkrecht zu einer bevorzugten Arbeitsrichtung 52 ausgerichtet, in welcher das Werkstück 14 gegen das angetriebene Werkzeug 16 angebracht wird (siehe auch Figur 4). Es ist besonders vorteilhaft, wenn das Muster 48 den Gefahrenbereich 28 markiert. Wie in Figur 1 zu sehen ist, fällt die Linie 50 mit einer Außengrenze des Gefahrenbereichs 28 zusammen. Somit stellt das Muster 48 eine optische Grenze dar, die von einem Anwender nicht zu überschreiten ist. Es ist daher von Vorteil, wenn die Projektionseinheit 44 zu einer Projektion im sichtbaren Bereich vorgesehen ist. Hierbei ist die Erfassungseinheit 30 insbesondere als Videokamera ausgebildet, die zu einer Erfassung im sichtbaren Bereich vorgesehen ist. Eine Projektion und ein Erfassen in einem unsichtbaren Bereich, wie z.B. in einem Infrarotbereich, sind denkbar. Das projizierte Muster 48 wird durch die als Videokamera ausgebildete Erfassungseinheit 30 erfasst. In der in Figur 1 dargestellten Situation ist die Arbeitsfläche 12 frei von Objekten. Ein in dieser Situation durch das erzeugte Muster 48 zustande kommendes und mittels der Erfassungseinheit 30 erfasstes Muster 54 ist in Figur 3 dargestellt. Da das erzeugte Muster 48 auf eine flache Oberfläche projiziert wird, entspricht das erfasste Muster 54 dem erzeugten Muster 48, d.h. das erfasste Muster 54 weist ebenfalls eine gerade, zusammenhängende Linie 56 auf.

Die Auswerteeinheit 36 ist erfindungsgemäß dazu vorgesehen, ein durch ein erzeugtes Muster, wie z.B. das Muster 48, zustande kommendes Muster auszuwerten, das mittels der Erfassungseinheit 30 erfasst wird. Hierzu ist die Auswerteeinheit 36 mit einer Recheneinheit 58 versehen, die dazu dient, das erfasste Muster auf zumindest ein geometrisches Merkmal zu untersuchen. Die Recheneinheit 58 kann einen Mikroprozessor aufweisen oder sie kann als Mikroprozessor ausgebildet sein. Sie untersucht das erfasste Muster mittels eines Programms, insbesondere eines Bildverarbeitungsprogramms, das in einer Speichereinheit 60 der Auswerteeinheit 36 gespeichert ist. Im vorliegenden Fall wird von der Recheneinheit 58 registriert, dass das erfasste Muster 54 einer geraden Linie 56 entspricht. In der Speichereinheit 60 sind ferner Referenzdaten vorgespeichert, die bei der Auswertung des erfassten Musters 54 herangezogen werden. Diese Referenzdaten entsprechen Mustermerkmalen, die jeweils für eine vorbestimmte, typische Anwendungssituation der Werkzeugmaschine 10 charakteristisch sind und jeweils einer Sicherheitsstufe der Sicherheitsvorrichtung 37 zugeordnet sind. Durch Heranziehen von diesen Daten ordnet die Recheneinheit 58 dem erfassten Muster 54 als gerade Linie die Anwendungssituation der Figur 1 und eine niedrige Sicherheitsstufe zu, nach welcher das Antreiben des Werkzeugs 16 fortgeführt wird.

Es wird nun angenommen, dass ein Anwender der Werkzeugmaschine 10 das Werkstück 14 auf die Arbeitsfläche 12 platziert. Dies ist in Figur 4 dargestellt. Hierbei ist eine auf das Werkstück 14 aufgelegte und das Werkstück 14 in die Arbeitsrichtung 52 führende Hand des Anwenders schematisch dargestellt. Aufgrund der Anordnung des Werkstücks 14 im Projektionsfeld der Projektionseinheit 44 weicht ein von der Erfassungseinheit 30 erfasstes Muster 62 vom durch die Mustererzeugungseinheit 46 erzeugten Muster 48 ab. Das erfasste Muster 62, das in Figur 5 dargestellt ist, weist die Form einer Gerade auf, aus welcher eine mittlere Linie 64 von den restlichen Endbereichen der Gerade abgesetzt ist, wobei die Linie 64 der Projektion des erzeugten Musters 48 auf die Oberfläche des Werkstücks 14 entspricht und die Endbereiche der Projektion des Musters 48 auf die Arbeitsfläche 12 entsprechen. Durch das Absetzen der mittleren Linie 64 entsteht eine Unterbrechung 66 des Musters 62. Insbesondere ist die Recheneinheit 58 dazu vorgesehen, das erfasste Muster 62 auf zumindest eine Unterbrechung zu untersuchen. Je nach Auslegung und/oder Anzahl der Unterbrechungen kann auf verschiedene Anwendungssituationen der Werkzeugmaschine 10 geschlossen werden. Durch Heranziehen von in der Speichereinheit 60 vorgespeicherten Referenzdaten werden Merkmale, insbesondere im Hinblick auf das Vorhandensein der Unterbrechung 66, als Merkmale erkannt, die für eine Anwendungssituation, und zwar insbesondere die in Figur 4 dargestellte Anwendungssituation charakteristisch sind. Im vorliegenden Fall wird dem ausgewerteten Muster 62 die niedrige Sicherheitsstufe zugeordnet, nach welcher das Antreiben des Werkzeugs 16 fortgeführt wird.

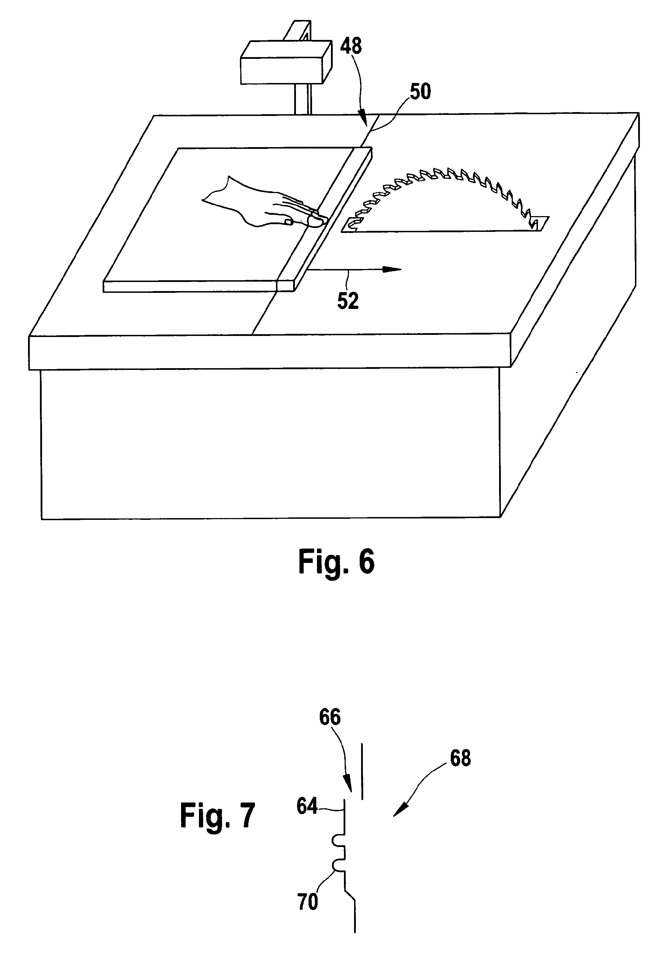

In Figur 6 ist ein weiterer Anwendungsfall dargestellt, in welchem eine Hand des Anwenders in den Gefahrenbereich 28 (siehe Figur 1) gelangt. Das von der Erfassungseinheit 30 in dieser Anwendungssituation erfasste Muster 68 ist in Figur 7 dargestellt. Zusätzlich zu den in Figur 5 vorhandenen Merkmalen weist das Muster 68 gekrümmte Bereiche in Form von Rundungen 70 der Linie 64 auf, die durch die Projektion des erzeugten Musters 48 auf die in den Gefahrenbereich 28 eindringenden Finger des Anwenders hervorgerufen sind. Insbesondere ist die Recheneinheit 58 dazu vorgesehen, ein erfasstes Muster auf die Krümmung von Linien zu untersuchen. Je nach Auslegung und/oder Anzahl von gekrümmten Bereichen, kann auf verschiedene Anwendungssituationen der Werkzeugmaschine 10 geschlossen werden. Im vorliegenden Fall werden die Rundungen 70 von der Recheneinheit 58 registriert. Durch Heranziehen von Referenzdaten der Speichereinheit 60 wird diesem Merkmal des erfassten Musters 68 eine hohe Sicherheitsstufe der Sicherheitsvorrichtung 37 zugeordnet, nach welcher ein Stoppen des Antriebs des Werkzeugs 16 und/oder ein Versenken des Werkzeugs 16 unterhalb der Arbeitsfläche 12 durchgeführt wird. Hierbei überträgt die Auswerteeinheit 36 ein Signal an die Steuereinheit 34, die die oben beschriebenen Sicherheitsmaßnahmen mit der Aktorikeinheit 38 und/oder 42 einleitet.

Die Anzahl von in der Speichereinheit 60 vorgespeicherten charakteristischen Merkmalen ist begrenzt. Kann ein Merkmal des erfassten Musters keinem der vorgespeicherten Merkmale in der Speichereinheit 60 zugeordnet werden, so wird, um eine hohe Sicherheit zu erreichen, dieses Merkmal automatisch der hohen Sicherheitsstufe zugeordnet. Hiermit wird diesem Merkmal des erfassten Musters diese Sicherheitsstufe zugeordnet, ohne dass eine vorbestimmte Anwendungssituation erkannt wird. Ausführungen der Auswerteeinheit 36 können sich durch diese Anzahl von vorbestimmten Anwendungssituationen, die der Auswerteeinheit 36 bekannt sind, unterscheiden. In einer einfachen Variante ist denkbar, dass in der Speichereinheit 60 lediglich Daten von charakteristischen Merkmalen gespeichert sind, welche gängigen Anwendungssituationen entsprechen, die der niedrigen Sicherheitsstufe zugeordnet sind, wie insbesondere die in den Figuren 1 und 4 dargestellten Anwendungssituationen. Werden durch Heranziehen dieser Daten Merkmale des erfassten Musters als typische Merkmale einer dieser Anwendungssituationen erkannt, so wird der Werkstückbearbeitungsvorgang weitergeführt. In allen anderen Fällen, die dann nicht einzeln erkannt werden, werden Sicherheitsmaßnahmen eingeleitet. Diese Variante ist insbesondere vorteilhaft bei der Bearbeitung von gängigen Werkstücken mit einfacher Geometrie, wie z.B. von planaren Holzstücken. In einer weiteren Variante ist denkbar, dass in der Speichereinheit 60 eine Datenbank gespeichert ist, mittels welcher alternativ oder zusätzlich Anwendungssituationen, für welche Sicherheitsmaßnahmen einzuleiten sind, von der Recheneinheit 58 einzeln erkannt werden können. Diese Datenbank kann z.B. im Werk und/oder mittels eines Selbstlernmodus der Auswerteeinheit 36 hergestellt werden.

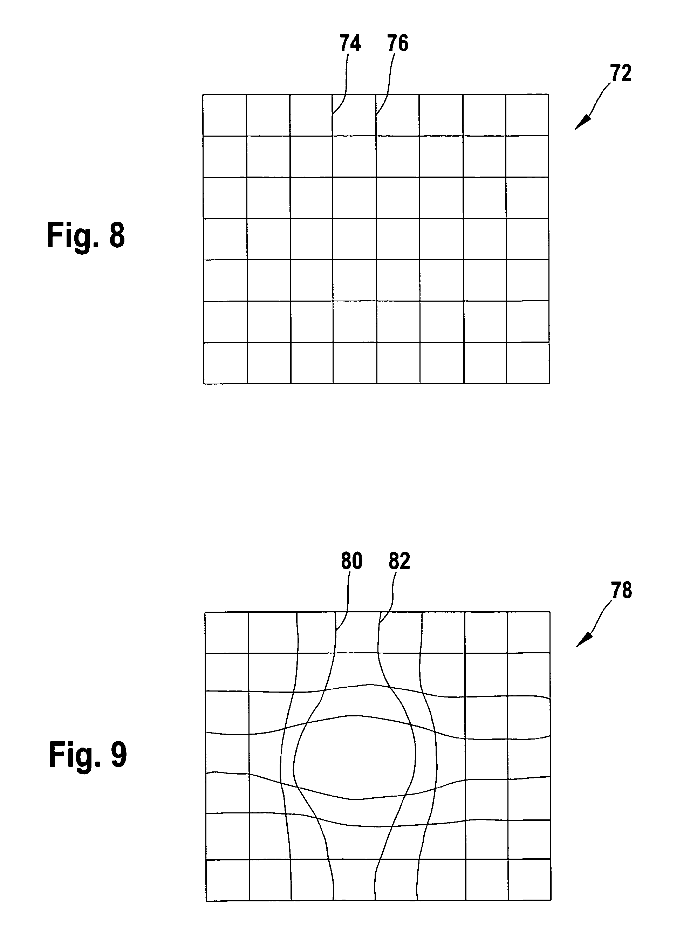

Weitere Ausführungen eines erzeugten Musters sind denkbar. In Figur 8 ist ein erzeugtes Muster 72 gezeigt, das als Gittermuster ausgebildet ist. Das Muster 72 weist insbesondere zwei parallele Linien 74, 76 auf. Ein von der Erfassungseinheit 30 erfasstes Muster 78 ist in Figur 9 dargestellt. Wie oben beschrieben, kann die Recheneinheit 58 Linien 80, 82, die den Linien 74, 76 des erzeugten Musters 72 entsprechen, auf das Vorhandensein von zumindest einer Unterbrechung untersuchen und/oder es kann die Krümmung einer der Linien 80, 82 untersucht werden. Ferner ist die Recheneinheit 58 dazu vorgesehen, die Parallelität von den Linien 80, 82 zu untersuchen. Insbesondere im vorliegenden Fall eines planaren Werkstücks 14 kann dem Merkmal eines nicht parallelen Verlaufs der Linien 80, 82, das z.B. insbesondere durch die Projektion des Musters 72 auf die Mittelhand oder einen Arm des Anwenders hervorgerufen wird, eine Sicherheitsstufe, wie z.B. die hohe Sicherheitsstufe, zugeordnet werden.

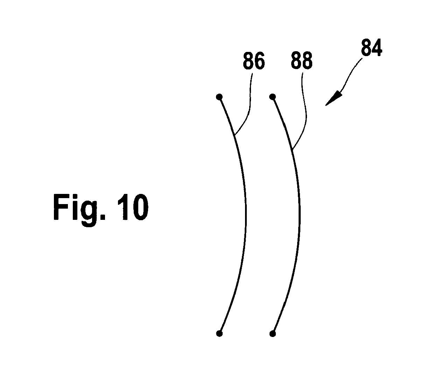

In einer weiteren Ausführungsvariante, die in Figur 10 dargestellt ist, wird von der Mustererzeugungseinheit 46 ein Muster 84 erzeugt, das gekrümmte Linien 86, 88 aufweist. Dies ist insbesondere bei einer Bearbeitung eines Werkstücks vorteilhaft, das eine gewölbte Oberfläche aufweist. Dadurch kann z.B. erreicht werden, dass die Krümmung der Werkstückoberfläche durch eine Krümmung des erzeugten Musters 84 kompensiert wird, so dass das auf die Werkstückoberfläche projizierte Muster 84 als gerades Muster ausgebildet ist. Die Linien 86, 88 sind zueinander parallel ausgerichtet. Wie oben ausgeführt, kann die Recheneinheit 58 die Parallelität von Linien eines erfassten Musters untersuchen, die den Linien 86, 88 im Muster 84 zugeordnet sind.

In einer Ausführungsvariante ist denkbar, dass die Werkzeugmaschinenvorrichtung 22 eine Eingabeeinheit aufweist, die der Überwachungseinheit 24 zugeordnet ist und mittels welcher ein Anwender eine Auswahl bezüglich eines zu projizierenden Musters treffen kann. Ferner ist denkbar, dass der Anwender mittels der Eingabeeinheit ein zu projizierendes, an ein zu bearbeitendes Werkstück angepasstes Muster gestaltet. Die Werkzeugmaschinenvorrichtung 22 eignet sich ferner bei anderen Typen von Werkzeugmaschinen, wie z.B. Kapp- und Gehrungssägen, Paneelsägen, Bandsägen usw.

## Patentansprüche

1. Werkzeugmaschinenvorrichtung mit einer Überwachungseinheit (24) zur Überwachung von zumindest einem Werkzeugmaschinenüberwachungsbereich (26), die eine Projektionseinheit (44) zur Projektion in den Werkzeugmaschinenüberwachungsbereich (26), eine Erfassungseinheit (30) zum Erfassen des Werkzeugmaschinenüberwachungsbereichs (26) und eine Mustererzeugungseinheit (46) aufweist, die dazu vorgesehen ist, wenigstens ein Muster (48; 72; 84) für eine Projektion in den Werkzeugmaschinenüberwachungsbereich (26) zu erzeugen, sowie mit einer Sicherheitsvorrichtung (37), die zur Durchführung einer Sicherheitsmaßnahme in Abhängigkeit eines Signals einer Auswerteeinheit (36) vorgesehen ist, **dadurch gekennzeichnet, dass** die Auswerteeinheit (36) eine Recheneinheit (58) aufweist, die dazu vorgesehen ist, ein dem erzeugten Muster (48; 72; 84) zugeordnetes, mittels der Erfassungselnheit (30) erfasstes Muster (54, 62, 68; 78) auf ein vorbestimmtes geometrisches Merkmal zu untersuchen, wobei dem Merkmal des erfassten Musters (54, 62, 68; 78) eine von mehreren Sicherheitsstufen der Sicherheitsvorrichtung (37) zugeordnet ist.

2. Werkzeugmaschinenvorrichtung nach Anspruch 1, **dadurch gekennzeichnet, dass** das erzeugte Muster (48) dazu dient, einen Gefahrenbereich (28) in unmittelbarer Nähe eines Werkzeugs (16) zu markieren.

3. Werkzeugmaschinenvorrichtung nach einem der vorhergehenden Ansprüche, **dadurch gekennzeichnet, dass** das erzeugte Muster (48) zumindest eine zusammenhängende Linie (50) aufweist und die Recheneinheit (58) dazu vorgesehen ist, das erfasste Muster (62) auf zumindest eine Unterbrechung (66) zu untersuchen.

4. Werkzeugmaschinenvorrichtung nach einem der vorhergehenden Ansprüche, **dadurch gekennzeichnet, dass** das erzeugte Muster (48) zumindest eine Linie (50) aufweist und die Recheneinheit (58) dazu vorgesehen ist, die Krümmung einer der erzeugten Linie (50) zugeordneten Linie (64) des erfassten Musters (68) zu untersuchten.

5. Werkzeugmaschinenvorrichtung nach einem der vorhergehenden Ansprüche, **dadurch gekennzeichnet, dass** das erzeugte Muster (72) zumindest zwei parallele Linien (74, 76) aufweist und dass die Recheneinheit (58) dazu vorgesehen ist, die Parallelität von den erzeugten Linien (74, 76) zugeordneten Linien (80, 82) des erfassten Musters (78) zu untersuchen.

6. Werkzeugmaschinenvorrichtung nach einem der vorhergehenden Ansprüche, **dadurch gekennzeichnet, dass** das erzeugte Muster (72) als Gittermuster ausgebildet ist.

7. Werkzeugmaschinenvorrichtung nach einem der vorhergehenden Ansprüche, **dadurch gekennzeichnet, dass** das erzeugte Muster (84) zumindest eine gekrümmte Linie (86, 88) aufweist.

8. Werkzeugmaschinenvorrichtung nach einem der vorhergehenden Ansprüche, **gekennzeichnet durch** eine Sicherheitsvorrichtung (37), die zur Durchführung einer Sicherheitsmaßnahme in Abhängigkeit eines Signals der Auswerteeinheit (36) vorgesehen ist.

9. Werkzeugmaschine mit einer Werkzeugmaschinenvorrichtung nach einem der vorhergehenden Ansprüche.

10. Verfahren mit einer Werkzeugmaschinenvorrichtung, nach einem der Ansprüche 1 bis 8, mittels welcher ein Werkzeugmaschinenüberwachungsbereich (26) einer Werkzeugmaschine (10) überwacht wird, bei welchem ein Muster (48; 72; 84) erzeugt und in den Werkzeugmaschinenüberwachungsbereich (26) projiziert wird, **dadurch gekennzeichnet, dass** ein dem erzeugten Muster (48; 72; 84) zugeordnetes, erfasstes Muster (54, 62, 68; 78) ausgewertet wird.

11. Verfahren nach Anspruch 10 **dadurch gekennzeichnet, dass** einem Merkmal des erfassten Musters (54, 62, 68; 78) eine Sicherheitsstufe einer Sicherheitsvorrichtung (37) zugeordnet wird, mittels welcher eine Sicherheitsmaßnahme durchgeführt wird.

## Claims

1. Machine tool apparatus comprising a monitoring unit (24) for monitoring at least one machine tool monitoring region (26), said monitoring unit (24) having a projection unit (44) for projection into the machine tool monitoring region (26), a detection unit (30) for detecting the machine tool monitoring region (26) and a pattern-generating unit (46) which is provided for generating at least one pattern (48; 72; 84) for projection into the machine tool monitoring region (26), and comprising a safety device (37) which is provided for carrying out a safety measure as a function of a signal from an evaluating unit (36), **characterized in that** the evaluating unit (36) has a computing unit (58) which is provided for examining a pattern (54, 62, 68; 78) for a predetermined geometrical feature, said pattern (54, 62, 68; 78) being assigned to the generated pattern (48; 72; 84) and being detected by means of the detection unit (30), wherein one of several safety levels of the safety device (37) is assigned to the feature of the detected pattern (54, 62, 68; 78).

2. Machine tool apparatus according to Claim 1, **characterized in that** the generated pattern (48) serves to mark a hazard region (28) in the immediate vicinity of a tool (16).

3. Machine tool apparatus according to either of the preceding claims, **characterized in that** the generated pattern (48) has at least one continuous line (50) and the computing unit (58) is provided for examining the detected pattern (62) for at least one discontinuity (66).

4. Machine tool apparatus according to one of the preceding claims, **characterized in that** the generated pattern (48) has at least one line (50) and the computing unit (58) is provided for examining the curvature of a line (64) of the detected pattern (68), said line (64) being assigned to the generated line (50).

5. Machine tool apparatus according to one of the preceding claims, **characterized in that** the generated pattern (72) has at least two parallel lines (74, 76) and **in that** the computing unit (58) is provided for examining the parallelism of lines (80, 82) of the detected pattern (78) which are assigned to the generated lines (74, 76).

6. Machine tool apparatus according to one of the preceding claims, **characterized in that** the generated pattern (72) is formed as a grid pattern.

7. Machine tool apparatus according to one of the preceding claims, **characterized in that** the generated pattern (84) has at least one curved line (86, 88).

8. Machine tool apparatus according to one of the preceding claims, **characterized by** a safety device (37) which is provided for carrying out a safety measure as a function of a signal from the evaluating unit (36).

9. Machine tool comprising a machine tool apparatus according to one of the preceding claims.

10. Method using a machine tool apparatus according to one of Claims 1 to 8, by means of which a machine tool monitoring region (26) of a machine tool (10) is monitored, in which method a pattern (48; 72; 84) is generated and projected into the machine tool monitoring region (26), **characterized in that** a detected pattern (54, 62, 68; 78) assigned to the generated pattern (48; 72; 84) is evaluated.

11. Method according to Claim 10, **characterized in that** a safety level of a safety device (37) is assigned to a feature of the detected pattern (54, 62, 68; 78), by means of which safety device (37) a safety measure is carried out.

## Revendications

1. Dispositif de machine-outil comprenant une unité de surveillance (24) pour surveiller au moins une zone à surveiller (26) de la machine-outil, qui présente une unité de projection (44) pour projeter dans la zone à surveiller (26) de la machine-outil, une unité de détection (30) pour détecter la zone à surveiller (26) de la machine-outil, et une unité de génération de modèle (46), qui est prévue pour générer au moins un modèle (48 ; 72 ; 84) pour une projection dans la zone à surveiller (26) de la machine-outil, ainsi qu'un dispositif de sécurité (37), qui est prévu pour mettre en oeuvre une mesure de sécurité en fonction d'un signal d'une unité d'analyse (36), **caractérisé en ce que** l'unité d'analyse (36) présente une unité de calcul (58) qui est prévue pour étudier un modèle (54, 62, 68 ; 78) associé au modèle généré (48 ; 72 ; 84), détecté au moyen de l'unité de détection (30) pour rechercher une caractéristique géométrique prédéterminée, un parmi plusieurs degrés de sécurité du dispositif de sécurité (37) étant associé à la caractéristique du modèle détecté (54, 62, 68 ; 78).

2. Dispositif de machine-outil selon la revendication 1, **caractérisé en ce que** le modèle généré (48) sert à marquer une zone de danger (28) à proximité immédiate d'un outil (16).

3. Dispositif de machine-outil selon l'une quelconque des revendications précédentes, **caractérisé en ce que** le modèle généré (48) présente au moins une ligne continue (50) et l'unité de calcul (58) est prévue pour étudier le modèle détecté (62) pour rechercher au moins une interruption (66).

4. Dispositif de machine-outil selon l'une quelconque des revendications précédentes, **caractérisé en ce que** le modèle généré (48) présente au moins une ligne (50) et l'unité de calcul (58) est prévue pour étudier la courbure d'une ligne (64) du modèle détecté (68), associée à la ligne générée (50).

5. Dispositif de machine-outil selon l'une quelconque des revendications précédentes, **caractérisé en ce que** le modèle généré (72) présente au moins deux lignes parallèles (74, 76) et **en ce que** l'unité de calcul (58) est prévue pour étudier le parallélisme de lignes (80, 82) du modèle détecté (78) associées aux lignes générées (74, 76).

6. Dispositif de machine-outil selon l'une quelconque des revendications précédentes, **caractérisé en ce que** le modèle généré (72) est réalisé sous forme de quadrillage.

7. Dispositif de machine-outil selon l'une quelconque des revendications précédentes, **caractérisé en ce que** le modèle généré (84) présente au moins une ligne courbe (86, 88).

8. Dispositif de machine-outil selon l'une quelconque des revendications précédentes, **caractérisé par** un dispositif de sécurité (37) qui est prévu pour mettre en oeuvre une mesure de sécurité en fonction d'un signal de l'unité d'analyse (36).

9. Machine-outil comprenant un dispositif de machine-outil selon l'une quelconque des revendications précédentes.

10. Procédé comprenant un dispositif de machine-outil selon l'une quelconque des revendications 1 à 8, au moyen duquel une zone à surveiller (26) d'une machine-outil (10) est surveillée, dans lequel un modèle (48 ; 72 ; 84) est généré et est projeté dans la zone à surveiller (26) de la machine-outil, **caractérisé en ce qu'**un modèle détecté (54, 62, 68 ; 78) associé au modèle généré (48 ; 72 ; 84) est analysé.

11. Procédé selon la revendication 10, **caractérisé en ce qu'**un degré de sécurité d'un dispositif de sécurité (37) est associé à une caractéristique du modèle détecté (54, 62, 68 ; 78), au moyen duquel une mesure de sécurité est mise en oeuvre.
